Europäisches Patentamt

European Patent Office

Office européen des brevets

(11) Numéro de publication: **0 274 925 B1**

## FASCICULE DE BREVET EUROPEEN

(45) Date de publication de fascicule du brevet:
**02.01.92**

(51) Int. Cl.⁵: **F22B 37/00**, B25J 5/00,
G21C 17/00, C25F 7/00

(21) Numéro de dépôt: **87402695.8**

(22) Date de dépôt: **30.11.87**

(54) **Dispositif d'exploration et/ou de traitement d'une surface lisse courbe.**

(30) Priorité: **01.12.86 FR 8616725**

(43) Date de publication de la demande:
**20.07.88 Bulletin 88/29**

(45) Mention de la délivrance du brevet:
**02.01.92 Bulletin 92/01**

(84) Etats contractants désignés:
**BE CH DE ES GB IT LI**

(56) Documents cités:
**EP-A- 0 007 557**
**EP-A- 0 010 034**
**EP-A- 0 112 576**
**EP-A- 0 186 488**
**FR-A- 2 242 750**

(73) Titulaire: **ELECTRICITE DE FRANCE Service National**
**2, rue Louis Murat**
**F-75008 Paris(FR)**

(72) Inventeur: **Gemma, Antoine**
**9 rue Descartes**
**F-92190 Meudon(FR)**

(74) Mandataire: **Martin, Jean-Jacques et al**
**Cabinet REGIMBEAU 26, Avenue Kléber**
**F-75116 Paris(FR)**

Rank Xerox (UK) Business Services

# Description

La présente invention est relative à un dispositif d'exploration et/ou de traitement d'une surface lisse courbe.

Les dispositifs permettant l'exploration ou le traitement d'une surface, ou de zones déterminées de cette surface, voient leur intérêt grandir dans le cadre de l'exploitation et de l'entretien des générateurs de vapeur des centrales nucléaires, notamment pour l'inspection des tubes de générateurs de vapeur.

De manière générale, un véhicule muni de moyens de progression de type chenille permet de déplacer un outil porte-sonde devant les ouvertures des tubes du générateur de vapeur, la chenille présentant par exemple des ergots susceptibles de s'engager dans les orifices précités de façon à assurer ainsi la progression de l'ensemble constitué par le véhicule et l'outil porte-sonde. De tels dispositifs ont été décrits notamment dans la demande de brevet français 2 471 026 publiée le 12 juin 1981.

Si de tels systèmes donnent satisfaction pour l'exploration et/ou l'intervention sur des surfaces munies d'ouvertures disposées selon un pas très régulier, le pas des ergots de la chenille étant adapté en conséquence, ils ne peuvent pas être utilisés dans le cas de surfaces lisses et notamment courbes.

Dans le même domaine technique de l'exploitation et/ou l'entretien des générateurs de vapeur des centrales nucléaires, il est nécessaire de disposer de systèmes d'exploration et/ou de traitement de surfaces lisses, courbes ou planes. En particulier, il est indispensable, préalablement à la mise en service du réacteur nucléaire, d'effectuer un polissage électrochimique des parois internes de la boîte à eau du générateur de vapeur, lesquelles comportent pour l'essentiel des surfaces lisses courbes, sphériques, ou planes.

Ce polissage est rendu nécessaire afin de réduire la susceptibilité de contamination de ces parois par fixation, en l'absence de poli, des produits d'érosion radioactifs tels que les oxydes contaminants issus de la partie centrale du réacteur et véhiculés par l'eau du générateur de vapeur et ainsi atténuer les risques d'exposition à ces produits contaminants des personnels d'intervention amenés à effectuer des interventions systématiques périodiques. Ce polissage peut en outre être effectué soit à titre préventif, ainsi que précédemment décrit, soit à titre curatif après un nombre d'heures de fonctionnement donné du réacteur.

On connaît de l'état de la technique des dispositifs d'exploration et/ou de traitement d'une surface lisse, susceptibles d'être utilisés soit dans le cas d'une surface courbe (FR-A-2 242 750), soit dans le cas d'une surface à faible ou très faible rayon de courbure, soit une surface sensiblement plane (EP-A-0 007 557).

Un objet de la présente invention est la mise en oeuvre d'un dispositif d'exploration et/ou de traitement d'une surface lisse à commande sensiblement automatique à partir de l'extérieur de la boîte à eau du générateur de vapeur.

Un autre objet de la présente invention est enfin la mise en oeuvre d'un dispositif d'exploitation et/ou de traitement d'une surface lisse d'une très grande fiabilité et d'une très grande sécurité de fonctionnement.

Le dispositif d'exploration et/ou de traitement d'une surface lisse courbe objet de l'invention contient les caractéristiques des revendications 1 ou 12. Il est remarquable en ce qu'il comprend un véhicule susceptible de se mouvoir sur cette surface selon un trajet déterminé, ce véhicule étant muni de moyens d'appui, sur cette surface, mobiles par rapport au corps du véhicule, un bras support du véhicule et solidaire de celui-ci à une de ses extrémités, le bras support étant à son autre extrémité rendu articulé en rotation au voisinage du centre de courbure de la surface courbe, les axes des moyens d'appui et du bras support étant susceptibles d'être orientés sensiblement concourants au voisinage du centre de courbure de la surface courbe, des moyens d'exploration et/ou de traitement de ladite surface courbe solidaires du véhicule et des moyens de commande et d'entraînement dudit véhicule et des moyens d'exploration et/ou de traitement.

L'invention trouve application à l'exploitation et/ou à l'entretien des générateurs de vapeur de réacteurs nucléaires ou à tout domaine technique dans lequel le déplacement d'un véhicule sur une surface lisse, notamment courbe, doit être effectué.

L'invention sera mieux comprise à la lecture de la description et à l'observation des dessins ci-après dans lesquels :

- les figures 1a et 1b représentent une vue en perspective d'un premier mode de réalisation non limitatif d'un dispositif d'exploration et/ou de traitement d'une surface lisse courbe conformément à l'invention,
- les figures 2a et 2b représentent respectivement un schéma général et une vue détaillée en coupe partielle d'un élément actif associé audit véhicule, cet élément actif étant constitué par une cellule d'électropolissage,
- les figures 3a et 3b représentent, en coupe partielle en ce qui concerne la figure 3b, une vue de dessus d'un mode de réalisation avantageux du véhicule du dispositif non représenté en figure 1a, 1b et une vue de face de la figure 3a selon la flèche représentée sur cette figure,

- la figure 3c représente, en coupe diamétrale, une vue d'une ventouse support du véhicule telle que représentée en figures 3a et 3b,
- les figures 4a à 4e représentent un exemple de fonctionnement séquentiel des différents éléments du véhicule représenté en figures 3a et 3b lors de la commande de déplacement de celui-ci,
- les figures 5a et 5b représentent respectivement, dans le cas particulier de faible ou de très faible rayon de courbure, un autre mode de réalisation du véhicule du dispositif objet de l'invention et une vue latérale de droite de la figure 5a selon la flèche représentée sur la figure précitée,
- les figures 5c et 5d représentent une vue d'ensemble plus détaillée des figures 5a et 5b,
- les figures 6a et 6b représentent un schéma synoptique de l'installation nécessaire à la mise en oeuvre tant du premier que du deuxième mode de réalisation du dispositif d'exploration et/ou de traitement d'une surface lisse courbe selon l'invention,
- la figure 6c représente un schéma synoptique d'arrêt d'urgence de l'installation représentée en figure 6a ou 6b.

Dans l'ensemble des dessins, les mêmes références représentent les mêmes éléments.

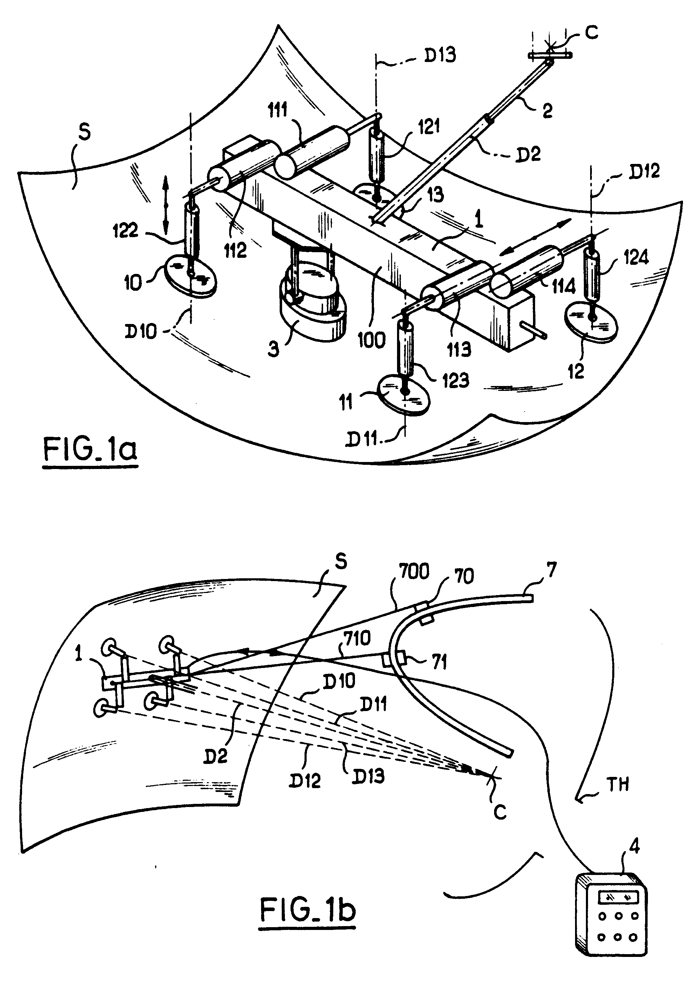

Le dispositif d'exploration et ou de traitement d'une surface lisse courbe objet de l'invention sera tout d'abord décrit en liaison avec les figures 1a et 1b, lesquelles représentent en perspective une vue détaillée et une vue plus générale du dispositif objet de l'invention, selon un premier mode de réalisation.

Conformément à la figure 1a, le dispositif d'exploration et/ou de traitement d'une surface lisse courbe, notée S sur la figure précitée, comprend un véhicule noté 1 susceptible de se mouvoir sur cette surface S, selon un trajet déterminé. Le véhicule 1 est muni de moyens d'appui 10, 11, 12, 13 sur cette surface S, ces moyens d'appui étant mobiles par rapport au corps du véhicule 1.

Un bras support 2 du véhicule est solidaire de celui-ci à une de ses extrémités, le bras 2 étant à son autre extrémité rendu articulé en rotation au voisinage du centre de courbure noté C de la surface courbe lisse S. Ainsi qu'il apparaît en figure 1a et en figure 1b notamment, les axes notés D10, D11, D12, D13 des moyens d'appui et du bras support 2, axe noté D2, sont susceptibles d'être orientés sensiblement concourants au voisinage du centre de courbure C de la surface courbe S.

Des moyens 3 d'exploration et/ou de traitement de la surface lisse courbe S sont solidaires du véhicule 1. Des moyens de commande et d'entraînement du véhicule 1, moyens notés 4, permettant également la commande des moyens d'exploration et/ou de traitement 3 précédemment décrits, sont également prévus. Bien entendu, ainsi que représentés schématiquement en figure 1b, les moyens de commande et d'entraînement 4 peuvent être prévus à distance convenable du véhicule 1 et,notamment dans le cas d'une application à l'exploitation et/ou à l'entretien d'installations telles que les boîtes à eau des générateurs de vapeur de centrales nucléaires, les moyens 4 précités peuvent ainsi qu'il sera décrit ultérieurement dans la description, être situés à l'extérieur du générateur de vapeur, une liaison par câble ou par tout dispositif de liaison étant assurée à travers le trou d'homme noté TH sur la figure 1b.

Selon une application particulièrement avantageuse du dispositif d'exploration et ou de traitement d'une surface lisse courbe objet de l'invention, les moyens 3 d'exploration et/ou de traitement solidaires du véhicule 1 comprennent, dans le cas du traitement de surface d'un générateur de vapeur de centrales nucléaires, et en particulier des parois de la boîte à eau de celui-ci, une cellule d'électropolissage notée 30.

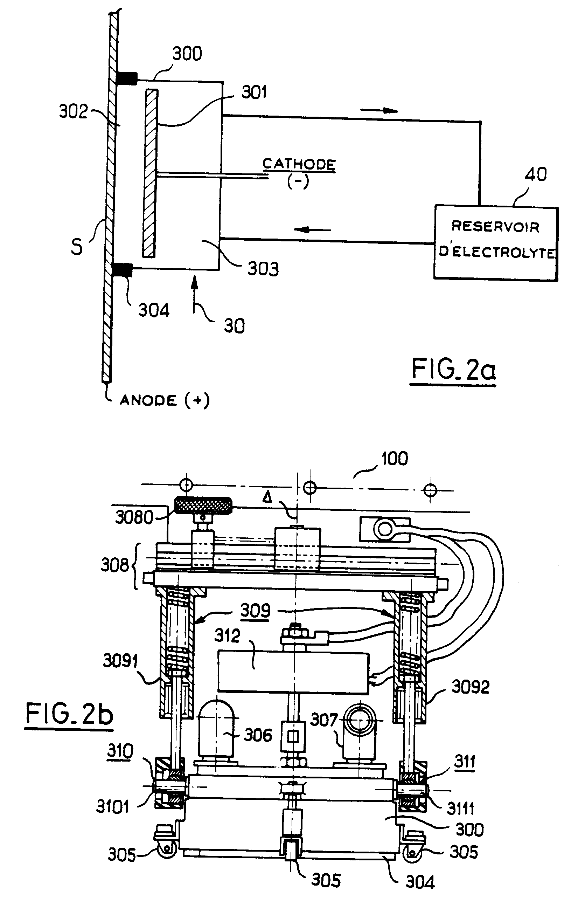

Une description plus détaillée d'une cellule d'électropolissage particulièrement adaptée au dispositif de traitement de surfaces objet de l'invention sera donnée en liaison avec les figures 2a et 2b.

Ainsi qu'il apparaît représenté de manière schématique en figure 2a, une cellule d'électropolissage notée 30 comprend, conformément à un objet de l'invention , une ventouse formée d'un corps de ventouse 300, sensiblement de révolution. Une électrode perméable notée 301, est située dans le corps de ventouse 300, et délimite dans celui-ci une chambre d'admission d'électrolyte notée 302 et une chambre d'aspiration d'électrolyte notée 303, lorsque le corps de ventouse est appliqué sur la paroi de la surface S à traiter. Un joint d'étanchéité noté 304 est disposé à la périphérie du corps de ventouse 300. Un électrolyte contenu dans un réservoir d'électrolyte noté 40 circule au travers de la cathode 301 percée de trous de faible diamètre, l'ensemble constitué par le corps de ventouse et la cathode se déplaçant le long de la paroi, l'étanchéité de la cellule d'électropolissage étant assurée par les joints d'étanchéité 304 précités.

Ainsi qu'il apparaît en outre en figure 2b, un jeu de roulettes 305 est solidaire du corps de ventouse 300, les roulettes étant destinées à former butée d'appui de la ventouse sur la surface S, afin de maintenir constante la distance de l'électrode 301 à la surface à traiter S. Sous l'effet de la dépression induite par l'aspiration de l'électrolyte, le joint d'étanchéité 304 est normalement écrasé. Afin de contrôler cet écrasement, le jeu de roulettes précité,constitué par des roulettes en polytétrafluoréthylène, est monté sur roulement à billes à axe pivotant fixé sur le corps de la ventouse. Ce jeu de roulettes a pour fonction d'assurer et de faciliter le glissement de la ventouse sur la surface S et empêche le phénomène de broutage qui apparaît quand le joint d'étanchéité 304 est trop écrasé.

Conformément à une caractéristique avantageuse de la cellule d'électropolissage objet de l'invention, la chambre d'admission 302 et la chambre d'aspiration 303 comportent respectivement une buse d'admission 306 et une buse d'aspiration 307 de l'électrolyte précédemment cité. Conformément à un autre aspect particulièrement avantageux de la cellule d'électropolissage objet de l'invention, la ventouse d'électropolissage est rendue solidaire du véhicule 1 par l'intermédiaire d'une table d'indexage 308, montée mobile en rotation par rapport à un axe Δ perpendiculaire à la direction formée par la buse d'admission 306 et la buse d'aspiration 307 de l'électrolyte. La table d'indexage 308 est munie de moyens de réglage 3080, permettant lors du déplacement du véhicule 1 de maintenir le plan contenant l'axe des buses d'admission et d'aspiration de l'électrolyte, notées 306, 307, sensiblement vertical . Bien entendu, pour un trajet donné, le réglage de l'orientation du plan précité peut être réglé une fois pour toute. En particulier lorsque la surface lisse courbe S est constituée par une surface sphérique, le trajet de déplacement du véhicule peut être constitué par un grand cercle de la sphère par exemple, et l'orientation dudit plan peut être réglée pour un trajet donné. Les moyens de réglage 3080 précités peuvent alors être constitués par un système de bouton moleté permettant d'entraîner, en rotation par rapport à l'axe Δ la table d'indexage 308 selon un angle d'orientation déterminé. Bien entendu, les moyens de réglage 3080 peuvent également être constitués par un moteur pas à pas solidaire de la table d'indexation et permettant le réglage à distance de celle-ci en fonction du trajet choisi.

Selon une autre caractéristique avantageuse de la cellule d'électropolissage conforme à l'objet de la présente invention, le corps de ventouse 300 est rendu solidaire de la table d'indexage 308, par l'intermédiaire d'une suspension élastique 309.

Selon un mode de réalisation avantageux de la suspension élastique précitée, celle-ci comprend au moins deux vérins à ressort notés sur la figure 2b 3091, 3092, dont le mandrin est rendu solidaire du corps de ventouse 300 par l'intermédiaire d'une articulation à rotule, notée 310, 311. L'articulation à rotule 310, 311 précitée, est montée sur deux pattes de fixation 3101, 3111, solidaires du corps de ventouse 300 et disposées selon un diamètre de celui-ci. Ainsi qu'on le remarquera notamment en figure 2b, chaque rotule 310, 311 est montée à glissement selon le diamètre précité. Les vérins à ressort 3091, 3092 sont montés fixes sur le plateau ou table d'indexage et sont disposés de façon que l'effort exercé par les ressorts du vérin, ou effort de plaquage,assure le contact permanent de la ventouse avec la paroi à traiter. Les vérins précités permettent de compenser les variations de niveaux éventuelles de la paroi en autorisant un mouvement de va et vient selon l'axe Δ précédemment décrit. La liaison des vérins ou corps de ventouse 300 par les rotules glissantes 310, 311, autorise la ventouse à prendre n'importe quelle position angulaire, sans introduire de contrainte de flexion dans les tiges de vérins et dans les pattes de fixation 3101, 3111 précédemment décrits. Lors du montage de la ventouse d'électropolissage sur le véhicule objet de l'invention, deux brides fixées sur le corps des vérins 3091, 3092 permettent d'assurer la compression de ceux-ci en maintenant le corps de ventouse et la ventouse en position haute.

Du fait que la ventouse est entraînée en rotation pour les corrections angulaires, il est avantageux d'alimenter l'électrode 301 en énergie électrique par un système distributeur. Celui-ci est avantageusement monté sur la tige de l'électrode et est noté 312. Le distributeur peut avantageusement comporter un système à balai et peut comporter un circuit de refroidissement par circulation d'air, permettant de limiter l'échauffement du distributeur.

Le corps de ventouse 300 peut avantageusement être constitué en un matériau synthétique tel que le PPH, polypropylène hydrogéné ou le PVDH, polyvinyl de fluoré.

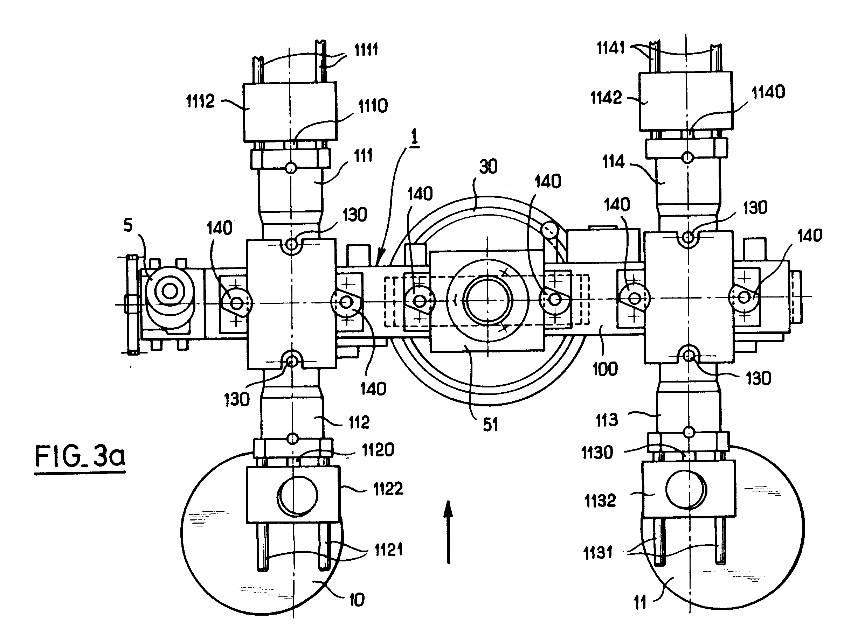

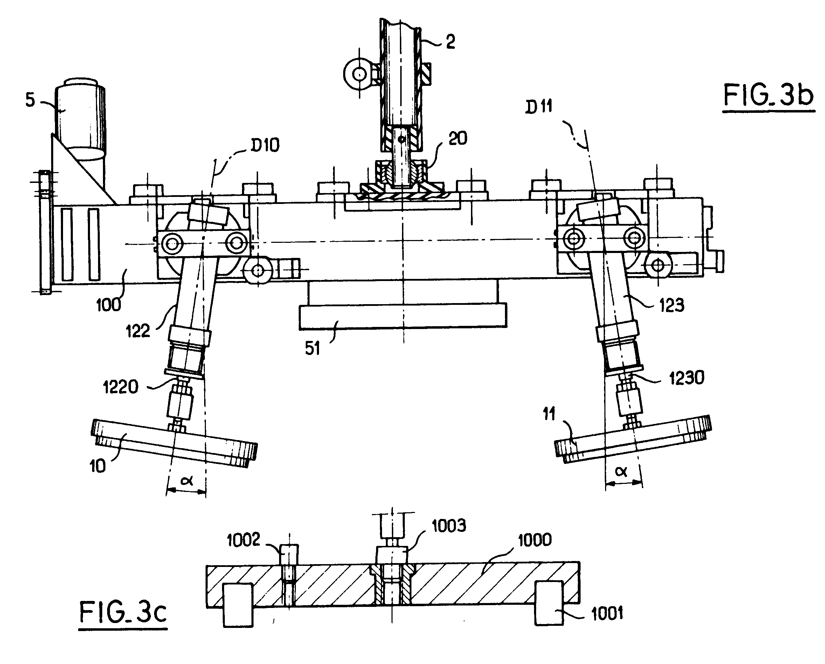

Une description plus détaillée d'un mode de réalisation particulièrement avantageux du véhicule 1 du dispositif d'exploration et/ou de traitement d'une surface courbe lisse conforme à l'objet de la présente invention, sera maintenant donnée dans le cas de l'exploration d'une surface sphérique, telle que celle de la boîte à eau d'un générateur de vapeur de centrale nucléaire, en liaison avec les figures 3a et 3b.

Selon les figures précitées, et en particulier selon la figure 3a, laquelle représente une vue de dessus du véhicule 1, celui-ci comprend une poutre centrale notée 100, servant de support de la ventouse 30. Ainsi qu'on le remarquera sur la figure 3b, l'arbre support 2 est mécaniquement solidaire de la poutre centrale 100, par une articulation à rotule notée 20, ménagée au voisinage du centre de la poutre centrale 100 précitée.

Des premiers vérins hydrauliques, notés respectivement 111, 112, 113, 114 sont rendus solidaires de la poutre centrale 100, par tout moyen mécanique convenable. Ces moyens mécaniques peuvent être constitués avantageusement par deux guides de centrage verrouillés par des cames à demi-tour. Les guides de centrage sont respectivement notés 130 sur la figure 3a et les cames à demi-tour sont notées 140. Les premiers vérins hydrauliques notés 111, 112, 113 et 114 comportent un mandrin mobile noté 1110, 1120, 1130, 1140 sur la figure 3a, le mandrin de chacun des premiers vérins hydrauliques précités étant disposé dans un premier plan de translation du véhicule par rapport à la surface à explorer et/ou traiter S. Ainsi, selon le mode de réalisation de la figure 3a, les premiers vérins précités sont disposés dans un plan, lequel, lors du déplacement du véhicule 1, sur la surface S sphérique, est parallèle à un plan tangeant à la surface sphérique S précitée.

En outre, ainsi qu'il apparaît plus clairement en figure 3b, le véhicule 1 est muni de deuxièmes vérins hydrauliques notés 121, 122, 123 et 124, lesquels sont solidaires chacun de l'extrémité du mandrin 1110, 1120, 1130, 1140 d'un premier vérin hydraulique 111, 112, 113, 114 respectivement. On notera cependant que sur la figure 3a, on a représenté par souci de simplification, uniquement le système de premiers et deuxièmes vérins complets relativement aux premiers vérins 112 et 113, mais il est bien évident que le véhicule 1, ainsi qu'on le remarquera en outre en figures 1a et 1b, l'extrémité du mandrin 1210, 1220, 1230, 1240 de chacun des deuxièmes vérins hydrauliques, extrémité mobile, est avantageusement munie d'une ventouse support notée 10, 11, 12, 13 respectivement, relativement aux deuxièmes vérins 122, 123, 124, 121. Les ventouses support 10, 11, 12, 13 précitées sont susceptibles d'être mises successivement en dépression et en pression, selon une séquence déterminée, laquelle en liaison avec la séquence de mise en pression des premiers et des deuxièmes vérins, permet le déplacement du véhicule 1 ainsi qu'il sera décrit ultérieurement dans la description.

Selon une autre caractéristique avantageuse du véhicule 1 représenté en figures 3a et 3b, le bras support 2 est un bras télescopique muni d'un vérin, permettant d'exercer sur le véhicule 1 une pression en permanence.

Ainsi qu'il apparaît clairement en figure 3b, l'axe longitudinal des deuxièmes vérins 121, 122 123 et 124 est incliné d'un angle $\alpha$ par rapport à la perpendiculaire à l'axe longitudinal de la poutre 100. On remarquera en particulier sur les figures 3a et 3b, que la fixation des deuxièmes vérins aux premiers vérins, et en particulier au mandrin mobile de ces derniers, peut avantageusement être réalisée par l'intermédiaire de rails de guidage notés respectivement 1121, 1131, 1111 et 1141, et de coulisseaux notés 1122, 1132, 1142 et 1112, la fixation des deuxièmes vérins tels que les vérins 122 et 123 par exemple, ainsi que représentés en figure 3b, aux coulisseaux respectifs 1122, 1132, pouvant avantageusement être réalisés par vissage ou par tout moyen. En outre, et de manière particulièrement avantageuse, l'axe longitudinal des deuxièmes vérins 121, 122, 123 et 124, axe noté D13, D10, D11 et D12, conformément à la figure 1a, et correspondant également aux axes des points d'appui précédemment cités, peut être orienté de façon à être incliné par rapport à la perpendiculaire à l'axe longitudinal de la poutre centrale 100, et orienté vers le point de fixation du bras support 2, au voisinage du centre de courbure C de ladite surface à traiter. Bien entendu, de façon non limitative, la fixation des deuxièmes vérins 121, 122, 123, 124 aux coulisseaux respectifs, peut avantageusement être réalisée de façon que l'inclinaison $\alpha$ représentée sur la figure 3b, puisse être réglée par l'opérateur. De cette façon, il est possible d'utiliser le dispositif d'exploration objet de l'invention muni du véhicule dans son mode de réalisation tel que représenté en figure 3b, pour des surfaces lisses de courbure sensiblement différente.

En outre, et de manière avantageuse, ainsi qu'on le remarquera en figures 3a et 3b, les moyens de traitement et/ou d'exploration 3, et en particulier la cellule d'électropolissage 30 peuvent avantageusement être montés mobiles sur le véhicule 1, c'est-à-dire sur la poutre centrale 100. Dans ce but, la ventouse d'électropolissage 30 est montée mobile en translation sur la face de la poutre 100 opposée à celle sur laquelle le bras support 2 est fixé. Dans ce but, la poutre centrale 100 est une poutre motorisée, c'est-à-dire une poutre munie de moyens de déplacement 5, d'un chariot mobile 51 sur lequel la cellule d'électropolissage 30 est montée par l'intermédiaire de la table d'indexage 308 précédemment décrite. A titre d'exemple non limitatif, les moyens de déplacement 5 peuvent consister en un moteur monté à extrémité de poutre centrale 100, entraînant une vis sans fin, laquelle permet le déplacement du chariot 51.

Une description plus détaillée d'une ventouse support 10, 11, 12, 13 montée à l'extrémité du mandrin mobile des deuxièmes vérins sera donnée en liaison avec la figure 3c.

Conformément à la figure précitée, chaque ventouse support peut comporter avantageusement un support d'application noté 1000, en matériau synthétique, tel que le PVC par exemple, muni d'un joint d'étanchéité noté 1001, le joint d'étanchéité étant monté à la périphérie du support d'application 1000 pour former une ventouse adhésive par mise en dépression. Les joints d'étanchéité 1001 peuvent avantageusement être constitués en un matériau élastomère. Une buse de mise en dépression 1002 abouche dans la cavité formée par le support d'application et de joints d'étanchéité, notés respectivement 1000 et 1001, l'ensemble étant monté à articulation avec le mandrin du vérin correspondant, par l'intermédiaire d'une rotule à ergot anti-rotation notée 1003.

Le véhicule 1 précédemment décrit en liaison avec les figures 3a et 3b est un système porteur assurant le positionnement et le déplacement de la ventouse d'électropolissage dans la partie sphérique de la boîte à eau du générateur de vapeur.

En phase de travail, le véhicule reste immobile et est solidarisé avec la paroi de la boîte à eau par les ventouses support 10, 11, 12 précédemment décrites, tandis que la ventouse d'électropolissage 30 se déplace le long de la poutre centrale 100 qui la porte, assurant ainsi la fonction d'électropolissage précitée.

En phase de déplacement, la ventouse d'électropolissage est à l'arrêt par rapport au véhicule 1. Ce dernier, par mise en mouvement permet de positionner la ventouse d'électropolissage sur une nouvelle zone à soumettre au traitement d'électropolissage précité. L'ensemble du véhicule et de l'appareillage est démontable en plusieurs parties distinctes, dont les dimensions autorisent leur passage par le trou d'homme TH, de diamètre 406 mm sensiblement. Les parties précitées peuvent être assemblées à l'intérieur de la boîte à eau par l'opérateur.

Un prototype de dispositif d'exploration et/ou de traitement d'une surface lisse courbe conforme à l'objet de la présente invention a été réalisé.

Dans le prototype précité, la poutre centrale 100 du véhicule 1 a été réalisée à l'aide d'une poutre motorisée connue sous le nom commercial de poutre de type "Tollo M90" de longueur 800 mm. Sur cette poutre, la course possible du chariot mobile 51 était de 500 mm. Les vérins du premier type assurant en fait le mouvement de translation du véhicule 1, vérins notés 111, 112, 113, 114, dont la course de mandrin était de l'ordre de 50 mm et les vérins du deuxième type assurant le support de l'ensemble du véhicule et le mouvement des ventouses support 10, 11, 12, 13 étaient des vérins présentant une course de 40 mm. Les mandrins mobiles des vérins de deuxième type solidarisés au support d'application 1000 de chacune des ventouses support 10, 11, 12, 13 étaient solidarisés par l'intermédiaire d'une rotule 1003, avec ergot anti-rotation. Cette solution technique favorise le positionnement de chaque ventouse support sur la paroi à traiter S, et élimine toute contrainte sur la tige du vérin qui pourrait découler d'une inclinaison importante de la paroi S.

Le bras support 2 muni d'un vérin peut dans le cas de l'application au traitement de la surface interne de la boîte à eau d'un générateur de vapeur, être lié au voisinage du centre de courbure de la paroi interne de la boîte à eau, et ainsi être fixé sur la plaque tubulaire, par un système cardan plus rotule. En phase de travail, le vérin du bras support 2 était alimenté par de l'air à deux bars de pression. Il assure ainsi une pression constante sur le véhicule 1 afin d'éviter son basculement. Son rôle est donc stabilisateur. En phase de déplacement, la poussée constante du vérin du bras support 2 facilite l'application des ventouses supports 10, 11, 12, 13 sur la paroi S à traiter.

En cas d'arrêt d'urgence, une pression supérieure, 6 bars par exemple, peut être appliquée sur le véhicule 1 et immobilise celui-ci sur la paroi sphérique. Le bras support 2 garantit alors le maintien en position du véhicule 1. Une pression d'une valeur comparable peut également être envoyée, en cas d'arrêt d'urgence, vers les vérins de deuxième type 121, 122, 123 et 124.

Afin d'assurer la mise en place en début d'exploration et/ou de traitement du dispositif objet de l'invention, il peut en outre être prévu de manière non limitative, un rail de guidage noté 7, lequel peut, de manière avantageuse, être monté sur la surface plane de la plaque tubulaire de la boîte à eau du générateur de vapeur, dans cette application. Ce rail de guidage 7 est représenté en figure 1b. Il peut avantageusement être formé d'un rail circulaire, de rayon de courbure 200 cm par exemple. Deux chariots à galet notés 70 et 71, sont disposés sur le rail précité et sont rendus solidaires du véhicule 1 par l'intermédiaire de câbles 700, 710. Le rail de guidage peut être fixé par des chevilles expansibles sur la plaque tubulaire précédemment citée,En fonctionnement, les chariots 70 et 71 suivent ainsi le véhicule 1 dans son déplacement. L'ensemble rail de guidage 7, chariot 70, 71 facilite ainsi la manutention du véhicule dont le positionnement en haut de la sphère, c'est-à-dire de la surface S à traiter, se fait par exemple, à l'aide d'un palan solidaire du rail 7. En sécurité, c'est-à-dire en cas de rupture de la dépression dans les ventouses support, le rail 7 permet d'assurer avec le bras support 2, le maintien en position du véhicule 1.

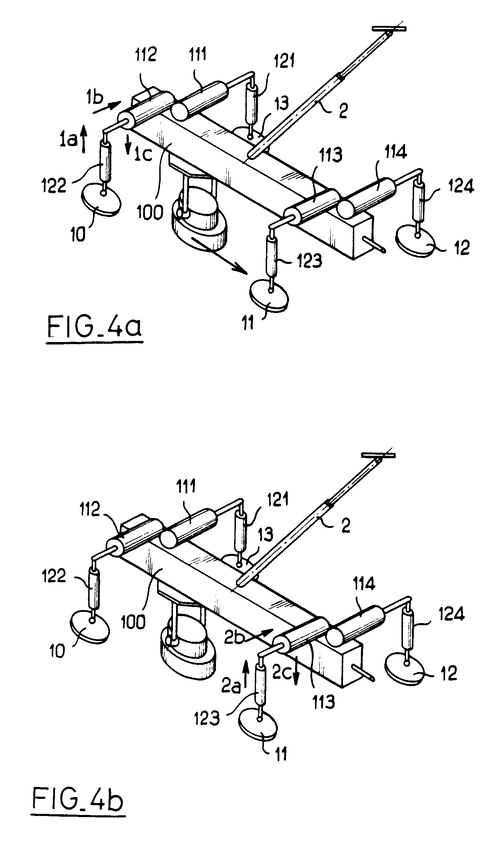

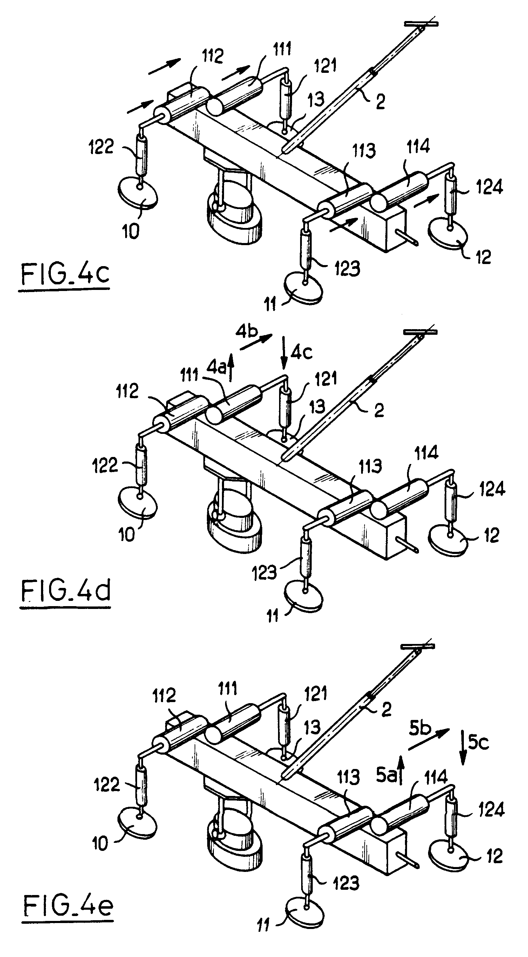

Une description plus détaillée de la commande séquentielle des vérins du premier et du deuxième type, permettant d'assurer le déplacement du véhicule 1 au cours du fonctionnement du dispositif d'exploration et/ou de traitement d'une surface S lisse courbe, objet de l'invention, sera maintenant donnée en liaison avec les figures 4a à 4e.

Le mouvement du véhicule 1 est réalisé par des déplacement successifs correspondants au déplacement des mandrins des vérins dits premiers vérins 111, 112, 113, 114. Le mouvement peut, bien entendu, se faire selon deux sens opposés, selon une direction perpendiculaire à l'axe longitudinal de la poutre 100, ces deux sens étant réputés constituer la marche avant ou la marche arrière du véhicule.

Le cycle de déplacement du véhicule 1 est réalisé automatiquement. Chaque mouvement est commandé par impulsions à partir des organes de commandes de déplacement 4 précédemment mentionnés dans la description. Un cycle peut comprendre, ainsi qu'il sera décrit ci-après plus en détail des déplacements successifs correspondant au déplacement des mandrins des vérins, dits premiers vérins 111, 112, 113, 114.

De manière générale, le véhicule est maintenu contre la paroi de la surface S à traiter, par l'application des ventouses support 10, 11, 12, 13, mises en dépression. Par le jeu des premiers et des deuxièmes vérins, les ventouses se déplacent successivement, permettant ainsi la progression du véhicule.

Le cycle du déplacement correspondant à un cycle pneumatique de commande des vérins des premiers et des deuxièmes vérins sera décrit ci-après.

- figure 4a :

La figure 4a correspond à la mise en mouvement de la première ventouse support 10. Ce mouvement est effectué par, successivement l'arrêt de la mise en dépression de la ventouse support 10, et la mise en pression du vérin 122, lequel soulève la ventouse support précitée. Le mouvement de la ventouse support 10 est symbolisé par la flèche 1a et le vérin 112 ramène l'ensemble constitué par le vérin 122 et la ventouse support 10, vers la poutre 100, selon le mouvement représenté par la flèche 1b. Le vérin 122 applique ensuite la ventouse support 10 sur la paroi selon le mouvement représenté par la flèche 1c, et la ventouse support 10 est à nouveau mise en dépression.

- figure 4b :

La figure 4b est relative au mouvement de la deuxième ventouse support 11, ces mouvements correspondent au mouvement précédemment décrits en liaison avec la figure 4a, mais relativement, respectivement à la ventouse support 11, au vérin 123 et au vérin 113. Les mouvements correspondants sont notés 2a, 2b, 2c sur la figure 4b.

- figure 4c :

La figure 4c est relative au mouvement de la poutre centrale 100. Afin d'assurer le déplacement de la poutre centrale 100, les vérins 112 et 113 se détendent simultanément, puis les vérins 111 et 114 se replient simultanément, ces mouvements simultanés entraînant un déplacement de la poutre 100 égal à la course des mandrins mobiles des vérins 112, 113, 111 et 114.

- figure 4d :

La figure 4d représente le mouvement de la troisième ventouse support 13. La mise en dépression de la ventouse support 13 est tout d'abord supprimée, puis le vérin 121 soulève la ventouse support précitée. Le vérin 111 éloigne alors l'ensemble constitué par le vérin 121 et la ventouse support 13 de la poutre centrale 100 puis le vérin 121 applique à nouveau la ventouse support 13 sur la paroi de la surface S à traiter et celle-ci est de nouveau mise en dépression. Sur la figure 4d, les différents mouvements sont représentés par les flèches notées 4a, 4b, 4c.

- figure 4e :

La figure 4e représente le mouvement de la quatrième ventouse support 12. Le mouvement de la quatrième ventouse support 12 est bien entendu identique au mouvement de la troisième ventouse support 13, mais, ce sont les vérins 124 et 114 qui agissent. Sur la figure 4e, les mouvements des vérins 124 et 114 sont représentés par les flèches 5a, 5b et 5c.

Ainsi, par commande séquentielle des différents vérins dits premiers vérins et deuxièmes vérins, le véhicule 1 peut se déplacer par pas incrément de déplacement correspondant à la course des vérins dits premiers vérins 111, 112, 113 et 114.

Un autre mode de réalisation du dispositif d'exploration et/ou de traitement d'une surface lisse courbe, conforme à l'objet de la présente invention sera décrit dans le cas de l'exploration ou du traitement d'une surface de très faible rayon de courbure ou même sensiblement plane. Ce deuxième mode de réalisation peut par exemple être avantageusement utilisé pour l'exploration et/ou le traitement de la surface de la plaque de partition de la boîte à eau d'un générateur de vapeur d'un réacteur nucléaire.

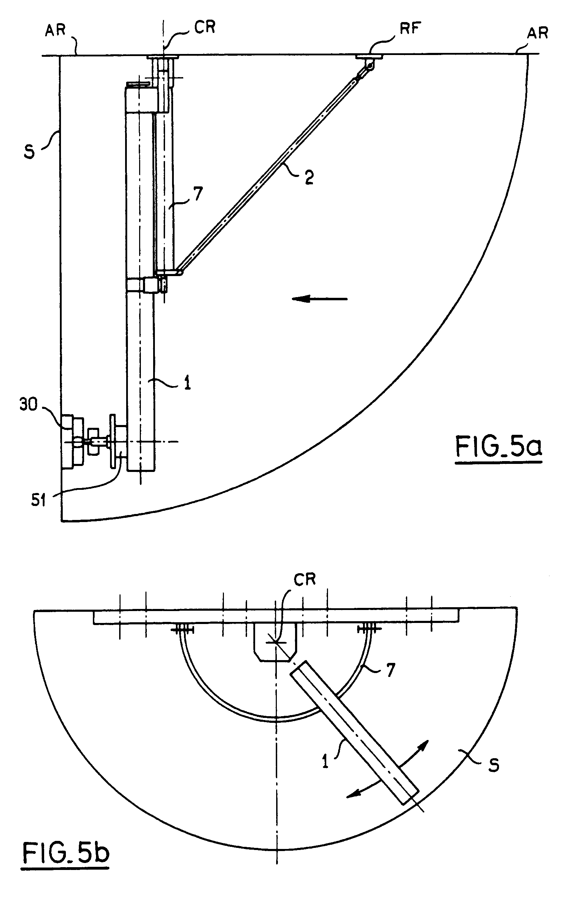

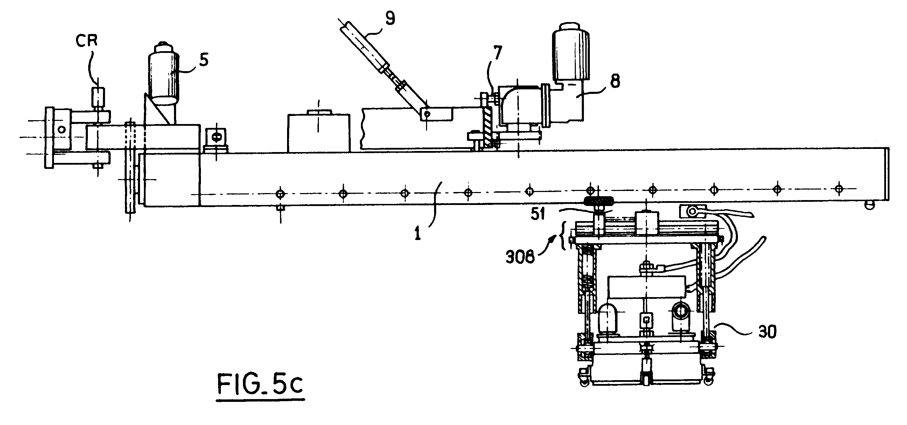

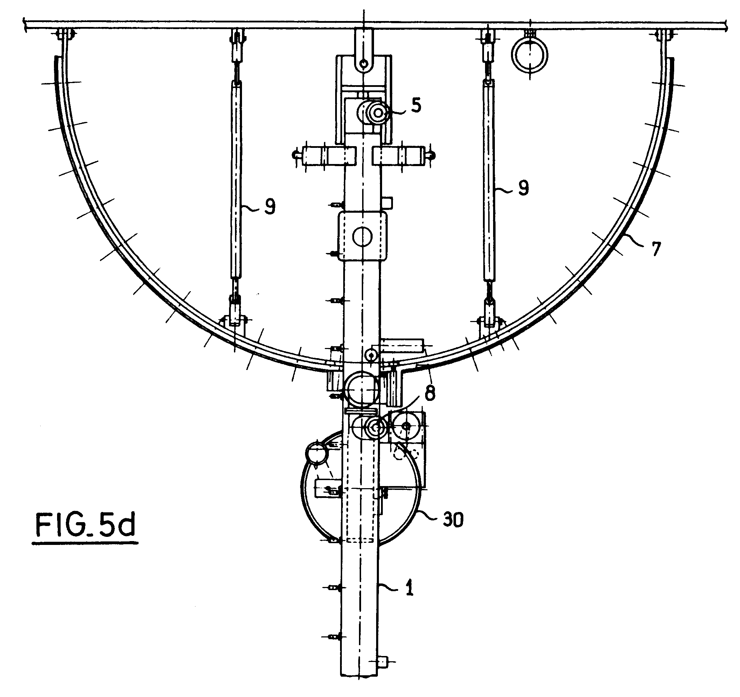

Dans ce cas, on comprendra que le centre de courbure de la plaque considérée est pratiquement rejeté à l'infini. Il est bien entendu dans ces conditions, avantageux, de simplifier le système précédemment décrit en liaison avec le premier mode de réalisation, de façon à permettre l'exploration et/ou le traitement d'une plaque plane ou sensiblement plane, ou en tout état de cause, présentant un très faible rayon de coubure. Ce mode de réalisation sera plus particulièrement décrit en liaison avec les figures 5a et 5b, puis avec les figures 5c et 5d.

Conformément aux figures 5a et 5b précitées, le véhicule 1 comporte avantageusement la poutre 100 mobile en rotation par rapport à un centre de rotation noté CR sur la figure 5a, le centre de rotation CR étant alors situé au voisinage de la surface S à traiter. Conformément au deuxième mode de réalisation, de l'objet de l'invention, des moyens d'appui sur la surface S présentent alors un axe sensiblement perpendiculaire à cette surface S. Le bras support 2 du véhicule est également solidaire de celui-ci à une de ses extrémités, et son autre extrémité est fixée à un point de référence fixe RF, la ligne AR formée par le centre de rotation CR du véhicule 1 et le point de référence fixe RF étant sensiblement orthogonal à la surface S. Conformément au mode de réalisation précité, l'ensemble constitué par le véhicule 1 et le bras support 2 est susceptible, en fonctionnement, d'être animé par les moyens de commande d'entraînement 4, d'un mouvement de rotation autour de la ligne AR, formée par le centre de rotation CR et le point de référence fixe RF, de façon à permettre un balayage sectoral de la surface S par le véhicule 1.

Ainsi qu'il apparaît également en figure 5a, une cellule d'électropolissage 30 est montée sur le véhicule 1, la ventouse d'électropolissage étant montée mobile en translation sur la face de la poutre 100 opposée à celle sur laquelle le bras support 2 est fixé.

Bien entendu, et de manière analogue au premier mode de réalisation de l'objet de l'invention, la cellule d'électropolissage 30, peut avantageusement être montée sur le véhicule 1, mobile en translation, par l'intermédiaire du chariot 51 et des moyens d'entraînement en translation 5.

Ainsi qu'il apparaît en outre en figure 2b les roulettes du jeu de roulettes 305 du corps de ventouse 300, jouent alors le rôle des moyens d'appui sur la surface S, moyens d'appui mobiles par rapport au corps du véhicule 1.

Ainsi qu'on le remarquera également en figure 5b, le rail de guidage 7 est également monté sur la plaque à tube du générateur de vapeur. Le rail de guidage 7 peut alors avantageusement être utilisé afin d'assurer le guidage du véhicule 1, selon un balayage sectoral. Le rail 7 présente alors une forme sensiblement en arc de cercle sur lequel le véhicule 1 prend appui et est monté à glissement. L'angle d'ouverture de l'arc de cercle constituant le rail 7, correspond bien entendu à l'angle sectoral maximum de balayage.

Une description plus détaillée du deuxième mode de réalisation représenté en figures 5a et 5b sera donnée en liaison avec les figures 5c et 5d.

Sur la figure 5c, on a représenté le véhicule 1, articulé par rapport au centre de rotation CR, et muni d'une cellule d'électropolissage 30, telle que précédemment décrite en liaison avec les figures 2a et 2b. En outre, ainsi qu'on le remarquera sur la figure 5c, le véhicule 1 est entraîné dans son mouvement de balayage sectoral, par l'intermédiaire d'un motoréducteur 8, installé sur la poutre 100, au voisinage du rail de guidage 7.

Le rail de guidage est par exemple une plaque décrivant un demi-cercle. Ce rail 7 est monté fixe à l'aide de deux axes sur les chapes extérieures du support du véhicule. En outre, ainsi que représenté en figure 5d, deux jambes de force 9 assurent le parallélisme du rail de guidage 7 par rapport à la plaque de partition. Elles limitent également la torsion du rail de guidage pendant la phase d'électropolissage. Les jambes de force 9 sont fixées par une platine de fixation sur la plaque tubulaire au moyen de chevilles expansibles par exemple. Les jambes de force 9 sont solidarisées avec le rail par deux axes. Un réglage en position du parallélisme du rail de guidage 7 avec la plaque tubulaire est possible grâce aux jambes de force 9. En effet, elles sont construites selon le principe d'un tendeur permettant le réglage du parallélisme précité. Une crémaillère en nylon est vissée sur la face externe, par rapport à la courbure du rail 7. Un motoréducteur 8, solidaire de la poutre 100, et engrenant avec cette crémaillère permet de mettre en oeuvre le mouvement de balayage sectoral de la poutre 100 et du véhicule 1.

Le motoréducteur 8 est entraîné en rotation par un moteur, tel qu'un moteur à courant continu alimenté en 12 V par exemple, monté sur la poutre 100. Deux galets solidaires avec le motoréducteur 8 et deux autres galets fixés sur la poutre 100 assurent le guidage de celle-ci par rapport au rail 7. Un autre galet monté sur la poutre et prenant appui sur l'intérieur du rail permet de maintenir un jeu constant entre le pignon moteur et la crémaillère. Il favorise en effet un rattrapage des variations éventuelles du rayon de rail de guidage 7 en provoquant une déformation légère lorsqu'il y a contact.

Deux relais de fin de course positionnés latéralement de part et d'autre de la poutre, permettent son arrêt en position haute, c'est-à-dire sensiblement horizontale, et déclenchent l'inversion de rotation du motoréducteur 8. Ils sont reliés par exemple à un système de de comptage avec compteur incrémental situé dans les moyens de commande de déplacement. Le compteur permet de décompter le nombre de passes effectuées par le véhicule 1. En outre, un commutateur peut permettre l'inversion de rotation du motoréducteur en cas de nécessité.

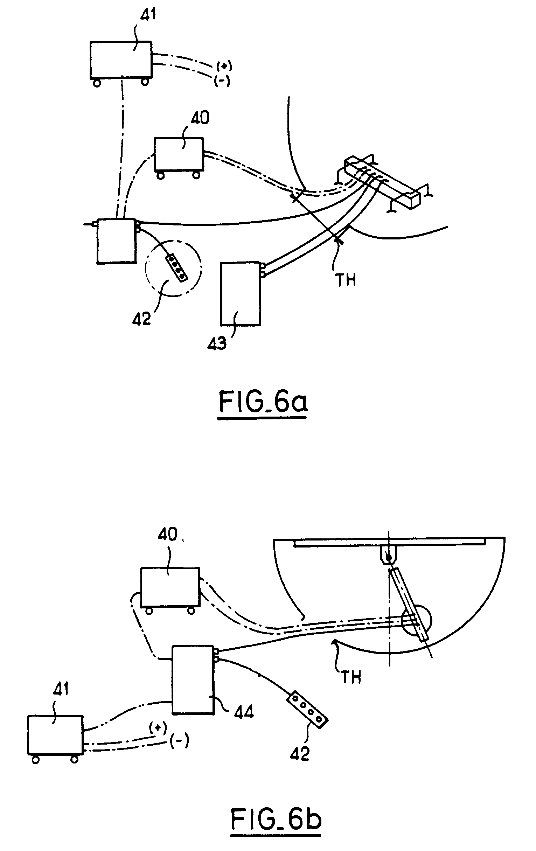

Une description plus détaillée de l'ensemble des dispositifs d'exploration et/ou de traitement d'une surface lisse courbe, objet de l'invention, tant dans le premier que dans le deuxième mode de réalisation, sera donnée en liaison avec les figures 6a et 6b.

Conformément aux figures précitées, les moyens 4 de commande et d'entraînement du véhicule 1 peuvent comporter, dans le cas de l'utilisation d'une cellule d'électropolissage 30 notamment, des moyens 40 d'alimentation en électrolyte de la cellule d'électropolissage 30. En outre, des moyens redresseurs 41 permettent d'alimenter avec une tension continue, l'électrode de la cellule d'électropolissage 30. Un bloc logique 42 de commande délivre au véhicule 1 des ordres de commande sous forme de commande logique pneumatique, par l'intermédiaire d'un générateur de pression 43, lequel permet d'engendrer des séquences de commande en logique pneumatique, conformément aux figures 4a à 4e relativement aux premiers et aux deuxièmes vérins, ou par l'intermédiaire d'un bloc de commande logique électrique 44 permettant de délivrer les séquences de commande du motoréducteur 8 et du moteur de déplacement du chariot 51.

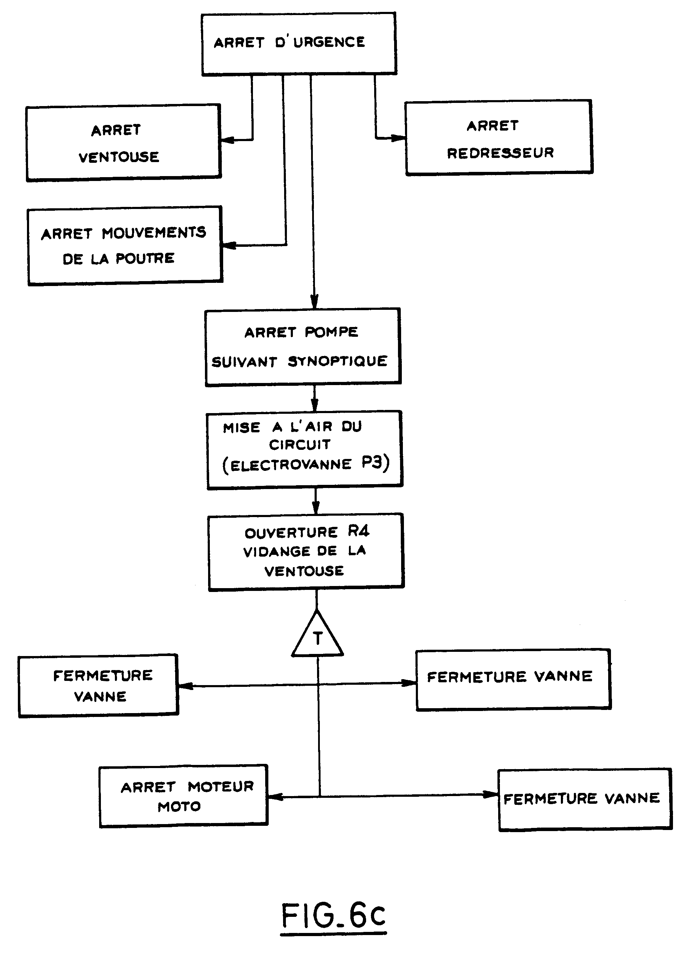

Un schéma synoptique de la commande d'arrêt d'urgence du dispositif d'exploration et/ou d'exploration d'une surface lisse courbe, tel que précédemment décrit dans les modes de réalisation différents est représenté en figure 6c.

Selon cette figure, l'arrêt d'urgence commande l'arrêt de l'avance de la ventouse d'électropolissage 30, l'arrêt du cycle pneumatique ou électrique de déplacement du véhicule 1, l'arrêt des moyens redresseurs 41, l'arrêt de la pompe de mise en circulation de l'électrolyte 40, avec une temporisation retardatrice pour la vidange de la ventouse d'électropolissage 30, soit la mise en pression à pression élevée des vérins dits deuxièmes vérins, et du vérin du bras de poussée dans le cas du premier mode de réalisation, afin d'assurer le blocage du véhicule, le blocage du véhicule dans le deuxième mode de réalisation étant assuré par l'intermédiaire du motoréducteur, lequel, irréversible, maintient celui-ci en position.

On a ainsi décrit un dispositif d'exploration et/ou de traitement d'une surface lisse courbe, particulièrement performant, dans la mesure où celui-ci peut être utilisé pour l'exploration de surfaces lisses, sur lesquelles aucun moyen de fixation intrinsèque à la paroi ne peut être utilisé.

Le dispositif d'exploration et/ou de traitement de surfaces lisses, courbes, objet de l'invention est remarquable en ce que, compte tenu des modes de réalisation présentés, celui-ci peut être utilisé, notamment dans le cas d'une application pour l'exploitation et/ou l'entretien des parois de la boîte à eau d'un générateur de vapeur, pour des surfaces sphériques et/ou de rayon de courbure très faible ou sensiblement plane. La conception modulaire des éléments constitutifs du dispositif d'exploration et/ou de traitement d'une surface lisse objet de l'invention, permet l'utilisation de celui-ci dans les conditions particulièrement délicates de l'environnement électronucléaire, et notamment de l'accessibilité aux parois internes des boîtes à eau des générateurs de vapeur.

## Revendications

1. Dispositif d'exploration et/ou de traitement d'une surface lisse courbe (S), comprenant un véhicule (1) susceptible de se mouvoir selon un trajet déterminé, des moyens (3) d'exploration et/ou de traitement de ladite surface courbe, solidaires du véhicule (1), et des moyens (4) de commande et d'entraînement dudit véhicule (1) et des moyens d'exploration et/ou de traitement, caractérisé en ce que le véhicule (1) est susceptible de se mouvoir sur la surface (S) à l'aide de moyens d'appui (10, 11, 12, 13 ; 305), mobiles par rapport au corps du véhicule et commandés par lesdits moyens (4) de commande et d'entraînement, et en ce qu'un bras support (2) dudit véhicule, solidaire de celui-ci à une extrémité et rendu, à une autre extrémité, articulé en rotation au voisinage du centre de courbure (C) de ladite surface courbe (S), comprend des moyens permettant d'exercer en permanence une pression sur ledit véhicule (1), et en ce que les axes (D10, D11, D12, D13) desdits moyens d'appui et du bras support (D2) sont susceptibles d'être orientés sensiblement concourants au voisinage dudit centre de courbure (C) de la surface courbe (S).

2. Dispositif selon la revendication 1, caractérisé en ce que lesdits moyens (3) d'exploration et/ou de traitement solidaires du véhicule (1) comprennent dans le cas du traitement de surface d'un générateur de vapeur de centrale nucléaire une cellule d'électropolissage (30).

3. Dispositif selon la revendication 2, caractérisé en ce que ladite cellule (30) comprend :
   - une ventouse formée d'un corps de ventouse (300) sensiblement de révolution,
   - une électrode perméable (301) située dans le corps de ventouse (300) et délimitant dans celui-ci une chambre d'admission d'électrolyte (302) et une chambre d'aspiration d'électrolyte (303) lorsque le corps de ventouse est appliqué sur la paroi de la surface (S) à traiter,
   - un joint d'étanchéité (304) disposé à la périphérie du corps de ventouse (300),
   - un jeu de roulettes (305) solidaires du corps de ventouse (300), lesdites roulettes étant destinées à former butée d'appui de ladite ventouse sur ladite surface (S) afin de maintenir constante la distance de l'électrode (301) à la surface à traiter (S).

4. Dispositif selon la revendication 3, caractérisé en ce que ladite chambre d'admission (302) et ladite chambre d'aspiration (303) comportent respectivement une buse d'admission (306) et d'aspiration (307) d'un électrolyte, ladite ventouse étant rendue solidaire dudit véhicule (1) par l'intermédiaire d'une table d'indexage (308) montée mobile en rotation par rapport à un axe (Δ) perpendiculaire à la direction formée par la buse d'admission (306) respectivement d'aspiration (307) de l'électrolyte, ladite table (308) permettant au cours du déplacement du véhicule (1) de maintenir le plan contenant l'axe desdites buses (306, 307) sensiblement vertical.

5. Dispositif selon la revendication 4, caractérisé en ce que ledit corps de ventouse est rendu solidaire de la table d'indexage (308) par l'intermédiaire d'une suspension élastique (309).

6. Dispositif selon la revendication 5, caractérisé en ce que ladite suspension élastique (309) comprend :
   - au moins deux vérins à ressorts (3091,3092) dont le mandrin est rendu solidaire dudit corps de ventouse (300) par l'intermédiaire d'une articulation à rotule (310,311), ladite articulation à rotule étant montée sur deux pattes de fixation (3101,3111) solidaires du corps de ventouse (300) et disposées selon un diamètre de celui-ci, chaque rotule étant montée à glissement selon le diamètre précité.

7. Dispositif selon l'une des revendications 3 à 6, caractérisé en de que ledit corps de ventouse (300) est constitué en un matériau synthétique tel que le PPH ou le PVDF.

8. Dispositif selon l'une des revendications 3 à 7, caractérisé en ce que dans le cas de l'exploration d'une surface sphérique telle que la boîte à eau d'un générateur de vapeur de centrale nucléaire, ledit véhicule (1) comporte :
   - une poutre centrale (100) servant de support de ladite ventouse (300), ledit bras support (2) étant mécaniquement solidaire, par une articulation à rotule (20) de la poutre (100) au voisinage du centre de celle-ci,
   - des premiers vérins hydrauliques (111,112,113,114) dont le mandrin mobile (1110,1120,1130,1140) est disposé dans un premier plan de translation du véhicule par rapport à ladite surface à explorer et/ou à traiter,
   - des deuxièmes vérins (121,122,123,124) hydrauliques solidaires chacun de l'extrémité du mandrin (1110, 1120, 1130, 1140) d'un premier vérin hydraulique (111,112,113,114) respectivement, l'extrémité du mandrin mobile (1210,1220,1230,1240)de chacun desdits deuxièmes vérins hydrauliques étant munie d'une ventouse support (10,11,12,13) susceptible d'être mise successivement en dépression et en pression.

9. Dispositif selon l'une des revendications 1 à 8, caractérisé en ce que ledit bras (2) est un bras télescopique muni d'un vérin permettant d'exercer sur ledit véhicule (1) une pression en permanence.

10. Dispositif selon les revendications 8 et 9, caractérisé en ce que l'axe longitudinal desdits deuxièmes vérins (121,122,123,124) est incliné, chaque axe étant ainsi orienté vers le point de fixation du bras (2) au voisinage du centre de courbure (C) de ladite surface.

11. Dispositif selon l'une des revendications 8 à 10, caractérisé en ce que ladite ventouse support comporte :
   - un support d'application (1000) en matériau synthétique,
   - un joint d'étanchéité (1001) en matériau élastomère, les joints d'étanchéité étant montés à la périphérie du support d'application (1000) pour former une ventouse adhésive par mise en dépression,
   - une buse de mise en dépression (1002) abouchant dans la cavité formée par le support d'application (1000) et le joint d'étanchéité (1001) pour former une ventouse adhésive par mise en dépression, l'ensemble étant monté à articulation avec le mandrin du vérin correspondant par l'intermédiaire d'une rotule à ergot anti-rotation (1003).

12. Dispositif d'exploration et/ou de traitement d'une surface (S) de très faible rayon de courbure ou sensiblement plane, telle que la plaque de partition de la boîte à eau d'un générateur de vapeur, comprenant un véhicule (1) susceptible de se mouvoir selon un trajet déterminé, des moyens (3) d'exploration et/ou de traitement de ladite surface (S), solidaires du véhicule (1), et des moyens (4) de commande et d'entraînement dudit véhicule (1) et des moyens d'exploration et/ou de traitement, ledit véhicule (1) consistant en une poutre (100) mobile en rotation par rapport à un centre de rotation (CR) situé au voisinage de la surface (S) et un bras support (2) dudit véhicule, solidaire de celui-ci à une extrémité, ayant son autre extrémité fixée a un point de référence fixe (RF), la ligne (AR) formée par le centre de rotation (CR) et le point de référence (RF) étant sensiblement orthogonale à ladite surface (S), l'ensemble constitué par le véhicule (1) et le bras support (2) est susceptible, en fonctionnement, d'être animé par lesdits moyens (4) de commande et d'entraînement d'un mouvement de rotation autour de la ligne (AR) de façon à permettre un balayage sectoral de ladite surface par ledit véhicule (1), caractérisé en ce que le véhicule (1) est susceptible de se mouvoir sur la surface (S) et est muni de moyens d'appui (305) sur cette surface faisant partie des moyens (3) d'exploration et/ou de traitement, mobiles sur la surface (S) à traiter et par rapport au corps du véhicule, lesdits moyens d'appui sur ladite surface (S) présentant un axe sensiblement perpendiculaire à ladite surface (S) sensiblement plane.

13. Dispositif selon l'une des revendications 8 à 12, caractérisé en ce que lesdits moyens (3) d'exploration et/ou de traitement comprennent une cellule d'électropolissage (30) montée sur le véhicule (1), comprenant une ventouse formée d'un corps de ventouse (300) sensiblement de révolution, une électrode perméable (301) située dans le corps de ventouse et un jeu de roulettes (305) solidaires du corps de ventouse (300), lesdites roulettes étant destinées à former butée d'appui de ladite ventouse sur ladite surface (S) afin de maintenir constante la distance de l'électrode (301) à la surface à traiter (S), en ce que que ladite ventouse est montée mobile en translation sur la face de la poutre (100) opposée à celle sur laquelle le bras support est fixé.

14. Dispositif selon la revendication 13, caractérisé en ce que lesdites roulettes du jeu de roulettes (305) du corps de ventouse (300) jouent le rôle desdits moyens d'appui sur la surface (S)-,mobiles par rapport au corps du véhicule (1).

15. Dispositif selon l'une des revendications 13 ou 14, caractérisé en ce que ladite poutre (100) est une poutre motorisée, c'est-à-dire munie de moyens de déplacement (5) d'un chariot (51) mobile en translation le long de la poutre (100), chariot (51) sur lequel ladite cellule d'électropolissage (30) est montée.

16. Dispositif selon l'une des revendications 8 à 15, caractérisé en ce que, afin d'assurer le balayage sectoral dudit véhicule, un rail de guidage (7) est prévu, ledit rail (7) présentant une forme sensiblement en arc de cercle sur lequel ledit véhicule (1) prenant appui et est monté à glissement, l'angle d'ouverture de l'arc de cercle constituant le rail (7) correspondant à l'angle sectoral maximum de balayage.

17. Dispositif selon l'une des revendications 12 à 16, caractérisé en ce que le véhicule (1) est entraîné par l'intermédiaire d'un moto - réducteur (8) installé sur la poutre (100) au voisinage du rail de guidage (7).

18. Dispositif selon l'une des revendications 1 à 17, caractérisé en ce que lesdits moyens (4) de commande et d'entraînement du véhicule (1) comportent, dans le cas de l'utilisation d'une cellule d'électropolissage (30) :
   - des moyens (40) d'alimentation en électrolyte de ladite cellule d'électropolissage (300),
   - des moyens redresseurs (41) permettant d'alimenter avec une tension continue l'électrode de ladite cellule d'électropolissage (30),
   - un bloc logique (42) de commande délivrant,au véhicule (1), des ordres de commande sous forme de commandes logiques pneumatiques (43) ou électriques (44).

**Claims**

1. Apparatus for the inspection and/or treatment of a smooth curved surface (S), comprising a vehicle (1) capable of propelling itself along a predetermined path, means (3) of inspecting and/or treating the said curved surface, forming a fixed part of the vehicle (1), and means (4) of controlling and driving the said vehicle (1) and means of inspection and/or treatment, characterised in that the vehicle (1) is capable of propelling itself over the surface (S) with the assistance of means (10, 11, 12, 13; 305) of support on the surface, movable in relation to the body of the vehicle and controlled by the said means (4) of control and of movement, and in that a supporting arm (2) of the said vehicle, fixed to one end of the latter and caused to be rotatably articulated at the other end approximately around the centre of the curvature (C) of the said curved surface (S) comprises means of exercising continuously a pressure on the said vehicle (1), and in that the axes (D10, D11, D12, D13) of the said means of support and of the supporting arm (D2) are able to be aligned substantially coincidental with the approximate centre of curvature (C) of the said curved surface (S).

2. Apparatus in accordance with Claim 1 characterised in that the said means (3) of inspection and/or treatment forming a fixed part of the vehicle (1) comprises an electropolishing cell in the case of the surface treatment of the steam generator of a nuclear power station.

3. Apparatus in accordance with Claim 2, characterised in that the said cell (30) comprises:
   - a suction cup formed of a body (300) of substantially circular shape,
   - a permeable electrode (301) situated in the said suction cup body (300) and delimiting within this an electrolyte admission chamber (302) and an electrolyte suction chamber (303) when the body of the suction cup is applied to the surface (S) to be treated,
   - a fluid-tight seal (304) placed around the periphery of the suction cup body (300),
   - a set of castors (305) fixed to the suction cup body (300), the said castors being designed to form a limit stop for the said suction cup in relation to the said surface (S) so as to maintain the said electrode (301) at a constant distance from the surface to be treated (S).

4. Apparatus in accordance with Claim 3, characterised in that the said admission chamber (302) and the said suction chamber (303) incorporate respectively an electrode admission nozzle (306) and suction nozzle (307), the said suction cup being fixed to the said vehicle (1) by means of an indexing table (308) mounted rotatably around an axis (Δ) perpendicular to the direction formed by respectively the electrolyte admission nozzle (306) and suction nozzle (307), the said table (308), during the course of the movement of the vehicle, allowing the plane containing the axis of the said nozzles (306, 307) to be maintained substantially vertical.

5. Apparatus in accordance with Claim 4, characterised in that the said suction cup body is fixed to the indexing table (308) through the intermediary of an elastic suspension (309).

6. Apparatus in accordance with Claim 5, characterised in that the said elastic suspension (309) comprises:
   - at least two spring-loaded rams (3091, 3092) the piston of which is fixed to the said suction cup body (300) through a ball joint (310, 311), the said ball joint being mounted on two fixing pads (3101, 3111) fixed to the suction cup body (300) and placed at a diameter of the latter each ball joint being mounted so as to slide at the aforementioned diameter.

7. Apparatus in accordance with one of Claims 3 to 6, characterised in that the said suction cup body (300) is made of a synthetic material such as hydrogenated polypropylene or polyvinyl fluoride.

8. Apparatus in accordance with one of Claims 3 to 7, characterised in that in the case of the inspection of a spherical surface such as that of the steam generator water tank of a nuclear power station, the said vehicle (1) comprises :
   - a central beam (100) serving as a support for the said suction cup (300), the said supporting arm (2) being mechanically fixed, through a ball joint (20) to the beam (100) at a point close to the centre of the latter,
   - second hydraulic rams (121, 122, 123, 124) each fixed to the end of the piston (1110, 1120, 1130, 1140) of a first hydraulic ram respectively (111, 112, 113, 114), the end of the movable ram (1210, 1220, 1230, 1240) of each of the said second hydraulic rams being fitted with a supporting suction cup (10, 11, 12, 13) capable of being placed successively under suction and under pressure,

9. Apparatus in accordance with one of Claims 1 to 8, characterised in that the said arm (2) is a telescopic arm fitted with a ram able to exert a continuous pressure on the said vehicle (1).

10. Apparatus in accordance with Claims 8 and 9, characterised in that the horizontal axis of the said second rams (121, 122, 123, 124) is inclined, each axis thus being orientated towards the fixing point of the arm (2) close to the centre of curvature (C) of the said surface.

11. Apparatus in accordance with one of Claims 8 to 10, characterised in that the said suction cup comprises :
   - a backing plate (1000) of synthetic material,
   - a fluid-tight seal (1001) of elastomeric material, the seal being fitted around the periphery of the backing plate (1000) to form a suction cup adhering by being placed at subatmospheric pressure,
- a suction nozzle (1002) opening into the cavity formed by the backing plate (1000) and the seal (1001) to form the suction cup adhering by being placed at sub-atmospheric pressure, the whole being articulated on the piston of the corresponding ram by means of a ball joint with a nonrotating spigot (1003).

12. Apparatus for the inspection and/or treatment of a surface (S) with a very low curvature or substantially flat, such as a dividing baffle in the water tank of a steam generator comprising a vehicle (1) capable of propelling itself along a predetermined path, means (3) of inspection and/or of treatment of the said surface (S), fixed to the vehicle (1), and means (4) of control and propulsion of the said vehicle (1) and means of inspection and/or treatment, the said vehicle (1) consisting of a beam (100) movable in rotation in relation to a centre of rotation (CR) situated close to the surface (S) and a supporting arm (2) of the said vehicle, fixed at one end to the latter, having its other end fixed to a fixed datum point (RF), the line (AR) formed by the centre of rotation (CR) and the datum point (RF) being substantially orthogonal to the said surface (S), the whole assembly constituted by the vehicle (1) and the supporting arm (2) is able, when working, to be activated by the said means (4) of control and movement to execute a rotary movement about the line (AR) in such a way as to produce a sectoral sweep of the said surface by the said vehicle (1), characterised in that the vehicle (1) is capable of propelling itself over the surface (S) and is fitted with means (305) of support on this surface forming a part of the movable means of inspection and/or treatment of the surface (S) to be treated and in relation to the body of the vehicle, the said means of support on the surface (S) have their axis substantially perpendicular to the said substantially flat surface (S).

13. Apparatus in accordance with one of Claims 8 to 12, characterised in that the said means (3) of inspection and/or treatment comprise an electropolishing cell (3) mounted on the vehicle (1), comprising a suction cup formed by a suction cup body (300) of substantially circular shape, a permeable electrode (301) situated in the body of the suction cup and a set of castors (305) fixed to the suction cup body (300), the said castors being designed to form a limit stop for the said suction cup on the said surface (S) in such a way as to maintain constant the distance between the electrode (301) and the surface to be treated (S), in that the said suction cup is mounted movably in translation on the face of the beam (100) opposite to that where the supporting arm is fixed.

14. Apparatus in accordance with Claim 13, characterised in that the said castors of the set of castors (305) on the body (300) of the suction cup play the part of the said means of support on the surface (S), movable in relation to the body of the vehicle (1).

15. Apparatus in accordance with Claims 13 or 14, characterised in that the said beam (100) is a motorised one, i.e., equipped with a means (5) of moving a trolley (51), movable in translation, along the length of the beam (100), trolley (51) on which is mounted the said electropolishing cell (30).

16. Apparatus in accordance with Claims 8 to 15, characterised in that, so as to ensure the sectoral sweep of the said vehicle, a guide rail (7) is provided, the said rail (7) having a shape substantially in the form of an arc of a circle on which the said vehicle (1) bears and is able to slide, the angle of aperture of the arc of the circle constituting the rail (7) corresponding to the maximum sectoral angle of sweep.

17. Apparatus in accordance with Claims 12 to 16, characterised in that the vehicle (1) is driven by a motor with reduction gearbox (8) mounted on the beam (100) in the area of the guide rail (7).

18. Apparatus in accordance with Claims 1 to 17, characterised in that the said means (4) of control and movement of the vehicle (1), when using an electropolishing cell, comprise :
- means (40) of supplying the said electropolishing cell (300) with electrolyte.
- means of rectification (41) allowing the electrode of the said electropolishing cell (30) to be supplied with direct current,
- a logic control unit (42) supplying commands to the vehicle (1) in the form of pneumatic (43) or electric (44) logic commands.

**Patentansprüche**

1. Gerät zur Exploration und/oder Behandlung einer glatten, gekrümmten Oberfläche (S) mit einem Fahrzeug (1), das geeignet ist, sich entlang einer vorgegebenen Trajektorie zu bewegen, Vorrichtungen (3) zur Exploration und/oder Behandlung der gekrümmten Oberfläche, die mit dem Fahrzeug (1) verbunden sind, und Vorrichtungen (4) zum Steuern und Antreiben des Fahrzeugs (1) und der Vorrichtungen zur Exploration und/ober Behandlung, dadurch gekennzeichnet, daß das Fahrzeug (1) geeignet ist, sich auf der Oberfläche (S) mit Hilfe von Stützvorrichtungen (10, 11, 12, 13; 305) zu bewegen, die bezüglich des Fahrzeugkörpers beweglich sind und von den Steuer- und Antriebsvorrichtungen (4) gesteuert werden, und daß ein Stützarm (2) des Fahrzeugs, der mit diesem an einem Ende befestigt und an einem anderen Ende in der Nähe des Krümmungsmittelpunktes (C) der gekrümmten Oberfläche (S) gelenkig zur Drehung verbunden ist, Vorrichtungen umfaßt, die ermöglichen, permanent einen Druck auf das Fahrzeug (1) auszuüben, und daß die Achsen (D10, D11, D12, D13) der Stützvorrichtungen und des Stützarms (D2) geeignet sind, im wesentlichen in der Nähe des Krümmungsmittelpunktes (C) der gekrümmten Oberfläche (S) zusammenlaufend ausgerichtet zu werden.

2. Gerät nach Anspruch 1, dadurch gekennzeichnet, daß die Vorrichtungen (3) zur Exploration und/oder Behandlung, die mit dem Fahrzeug (1) verbunden sind, in dem Fall der Oberflächenbehandlung eines Dampfgenerators eines Kernkraftwerks eine Elektropolierzelle (30) umfassen.

3. Vorrichtung nach Anspruch 2, dadurch gekennzeichnet, daß die Zelle (30) umfaßt:
   - einen Saugnapf aus einem Saugnapfkörper (300), der im wesentlichen ein Drehkörper ist,
   - eine permeable Elektrode (301), die sich in dem Saugnapfkörper (300) befindet und in diesem eine Kammer zur Zuführung eines Elektrolyten (302) und eine Elektrolytansaugkammer (303) begrenzt, wenn der Saugnapfkörper auf die Wand der zu behandelnden Oberfläche (S) aufgebracht wird,
   - eine Dichtungsverbindung (304), die an der Peripherie des Saugnapfkörpers (300) angeordnet ist,
   - einen Rollensatz (305), der mit dem Saugnapfkörper (300) verbunden ist, wobei die Rollen dazu bestimmt sind, einen Anschlag für den Saugnapf auf der Oberfläche (S) zu bilden, um den Abstand der Elektrode (301) von der zu behandelnden Oberfläche (S) konstant zu halten.

4. Gerät nach Anspruch 3, dadurch gekennzeichnet, daß die Zuführkammer (302) und die Ansaugkammer (303) jeweils eine Zuführdüse (306) und eine Ansaugdüse (307) für einen Elektrolyten aufweisen, wobei der Saugnapf über eine Verriegelungsplatte (308), die in Drehung bezüglich einer Achse ($\Delta$) senkrecht zur von der Zuführdüse (306) beziehungsweise der Ansaugdüse (307) für den Elektrolyten gebildeten Richtung beweglich montiert ist, an dem Fahrzeug (1) befestigt ist, wobei die Platte (308) im Verlaufe der Bewegung des Fahrzeugs (1) erlaubt, die Achsen der Düsen (306, 307) im wesentlichen vertikal zu halten.

5. Gerät nach Anspruch 4, dadurch gekennzeichnet, daß der Saugnapfkörper über eine elastische Aufhängung (309) mit der Verriegelungsplatte (309) verbunden ist.

6. Gerät nach Anspruch 5, dadurch gekennzeichnet, daß die elastische Aufhängung (309) umfaßt:
   - wenigstens zwei Federkolben (3091, 3092), deren Buchse mit dem Saugnapfkörper (300) über ein Kugelgelenk (310, 311) verbunden ist, wobei das Kugelgelenk auf zwei Befestigungsklauen (3101, 3111) montiert ist, die mit dem Saugnapfkörper (300) verbunden sind, und entlang eines Durchmessers desselben angeordnet sind, wobei die Kugelgelenke gleitend entlang des oben erwähnten Durchmessers montiert sind.

7. Gerät nach einem der Ansprüche 3 bis 6, dadurch gekennzeichnet, daß der Saugnapfkörper (300) aus einem synthetischem Material, wie etwa dem hydrogenierten Polypropylen oder dem Polyvinylidenfluorid besteht.

8. Gerät nach einem der Ansprüche 3 bis 7, dadurch gekennzeichnet, daß in dem Falle der Exploration einer sphärischen Oberfläche, wie etwa eines Wasserbehälters eines Dampfgenerators einer Kernreaktors, das Fahrzeug (1) umfaßt:
   - einen zentralen Träger (100), der als Stütze für den Saugnapf (300) dient, wobei der Stützarm (2) mechanisch über ein Kugelgelenk (20) mit dem Träger (100) in der Nähe dessen Mittelpunktes verbunden ist,
   - erste Hydraulikkolben (111, 112, 113, 114), deren bewegliche Buchse (1110, 1120, 1130, 1140) in einer ersten Translationsebene des Fahrzeugs bezüglich der zu explorierenden und/oder zu behandelnden Oberfläche angeordnet ist,

- zweite Hydraulikkolben (121, 122, 123, 124), die jeweils mit dem Ende der Buchse (1110, 1120, 1130, 1140) eines entsprechenden ersten Hydraulikkolbens (111, 112, 113, 114) verbunden sind, wobei das Ende der beweglichen Buchse (1210, 1220, 1230, 1240) jedes der zweiten Hydraulikkolben mit einem Stützsaugnapf (10, 11, 12, 13) versehen ist, der geeignet ist, nacheinander unter Unterdruck und unter Druck gesetzt zu werden.

9. Gerät nach einem der Ansprüche 1 bis 8, dadurch gekennzeichnet, daß der Arm (2) ein Teleskoparm ist, der mit einem Kolben versehen ist, der erlaubt, auf das Fahrzeug (1) permanent einen Druck auszuüben.

10. Gerät nach einem der Ansprüche 8 und 9, dadurch gekennzeichnet, daß die longitudinale Achse der zweiten Kolben (121, 122, 123, 124) geneigt ist, wobei jede Achse zum Befestigungspunkt des Arms (2) in der Nähe des Krümmungsmittelpunktes (C) der Oberfläche hin gerichtet ist.

11. Gerät nach einem der Ansprüche 8 bis 10, dadurch gekennzeichnet, daß der Saugnapf umfaßt:
   - einen Anwendungsträger (1000) aus einem synthetischen Material,
   - eine Dichtigkeitsverbindung (1001) aus einem elastomeren Material, wobei die Dichtigkeitsverbindungen an der Peripherie des Anwendungsträgers (1000) montiert sind, um einen durch Unterdruck haftenden Saugnapf zu bilden,
   - eine Düse (1002) zum Erzeugen von Unterdruck, die in den Hohlraum mündet, der von dem Anwendungsträger (1000) und der Dichtigkeitsverbindung (1001) gebildet wird, um einen durch Unterdruck haftenden Saugnapf zu bilden,
   - wobei die Anordnung über ein Kugelgelenk mit einem Antidrehhaken (1003) gelenkig mit der Buchse des entsprechenden Kolbens verbunden ist.

12. Gerät zur Exploration und/oder Behandlung einer Oberfläche (S) mit einem sehr geringen Krümmungsradius oder einer im wesentlichen ebenen Fläche, wie etwa der Trennwand des Wasserbehälters eines Dampfgenerators, mit einem Fahrzeug (1), das geeignet ist, sich entlang einer vorgegebenen Trajektorie zu bewegen, Vorrichtungen (3) zur Exploration und/oder Behandlung der Oberfläche (S), die mit dem Fahrzeug (1) verbunden sind, und Vorrichtungen (4) zum Steuern und Antreiben des Fahrzeugs (1) und der Vorrichtungen zur Exploration und/ober Behandlung, wobei das Fahrzeug (1) aus einem Träger (100) besteht, der drehbar bezüglich eines Drehzentrums (CR) beweglich ist, das sich in der Nähe der Oberfläche (S) befindet, und wobei sich ein Stützarm (2) des Fahrzeugs, der an diesem an einem Ende befestigt ist, sein anderes Ende an einem festen Bezugspunkt (RF) befestigt hat, wobei die Linie (AR), die durch das Rotationszentrum (CR) und den Bezugspunkt (RF) gebildet wird, im wesentlichen senkrecht zu der Oberfläche (S) steht, wobei die durch das Fahrzeug (1) und den Stützarm (2) gebildete Anordnung geeignet ist, im Betrieb von den Steuerungs- und Antriebsvorrichtungen (4) derart zu einer Drehbewegung um die Linie (AR) bewegt zu werden, daß ein abschnittsweises Überstreichen der Oberfläche durch das Fahrzeug (1) ermöglicht wird, dadurch gekennzeichnet, daß das Fahrzeug (1) geeignet ist, sich auf der Oberfläche (S) zu bewegen und mit auf der zu behandelnden Oberfläche (S) und bezüglich des Fahrzeugkörpers beweglichen Stützvorrichtungen (305) für diese Oberfläche versehen ist, die Teil der Explorations- und/oder Behandlungsvorrichtungen (3) sind, wobei diese Stützvorrichtungen für die Oberfläche (S) eine Achse im wesentlichen senkrecht zu der im wesentlichen ebenen Oberfläche (S) aufweisen.

13. Gerät nach einem der Ansprüche 8 bis 12, dadurch gekennzeichnet, daß die Vorrichtungen (3) zur Exploration und/oder Behandlung eine auf dem Fahrzeug (1) montierte Elektropolierzelle (30) umfassen, die umfaßt: einen Saugnapf aus einem Saugnapfkörper (300), der im wesentlichen ein Drehkörper ist, eine permeable Elektrode (301), die sich in dem Saugnapfkörper (300) befindet und einen Rollensatz (305), der mit dem Saugnapfkörper (300) verbunden ist, wobei die Rollen dazu bestimmt sind, einen Anschlag für den Saugnapf auf der Oberfläche (S) zu bilden, um den Abstand der Elektrode (301) von der zu behandelnden Oberfläche (S) konstant zu halten, und daß der Saugnapf in Translationsrichtung beweglich auf der Seite des Trägers (100) angeordnet ist, die gegenüber der liegt, an der der Stützarm befestigt ist.

14. Gerät nach Anspruch 13, dadurch gekennzeichnet, daß die Rollen des Rollensatzes (305) des Saugnapfkörpers (300) die Rolle der bezüglich des Fahrzeugkörpers (1) beweglichen Stützvorrichtungen für die Oberfläche (S) spielen.

15. Gerät nach einem der Ansprüche 13 oder 14, dadurch gekennzeichnet, daß der Träger (100) ein motorisierter Träger ist, das heißt, mit Bewegungsvorrichtungen (5) für einen in Translationsrichtung entlang des Trägers (100) beweglichen Wagen (51) versehen ist, wobei die Elektropolierzelle (30) auf diesen Wagen (51) montiert ist.

16. Gerät nach einem der Ansprüche 8 bis 15, dadurch gekennzeichnet, daß zum Sicherstellen des abschnittsweisen Überstreichens durch das Fahrzeug eine Führungsschiene (7) vorgesehen ist, wobei die Schiene (7) im wesentlichen eine Kreisbogenform aufweist, auf der das gestützte Fahrzeug (1) gleitend montiert ist, wobei der Öffnungswinkel des die Schiene (7) bildenden Kreisbogens dem maximalen Abschnittswinkel für das Überstreichen entspricht.

17. Gerät nach einem der Ansprüche 12 bis 16, dadurch gekennzeichnet, daß das Fahrzeug von einen Getriebemotor (8) angetrieben wird, der auf dem Träger (100) in der Nähe der Führungsschiene (7) angeordnet ist.

18. Gerät nach einem der Ansprüche 1 bis 17, dadurch gekennzeichnet, daß die Vorrichtungen (4) zum Steuern und Antreiben des Fahrzeugs (1) im Falle der Verwendung einer Elektropolierzelle (30) umfassen:
    - Vorrichtungen (40) zur Versorgung der Elektropolierzelle (300) mit einem Elektrolyten,
    - Gleichrichtervorrichtungen (41), die ermöglichen, die Elektrode der Elektropolierzelle (30) mit einer Gleichspannung zu versorgen,
    - einen logischen Steuerblock (42), der dem Fahrzeug (1) Befehle in der Form pneumatischer (43) oder elektrischer (44) logischer Befehle gibt.

FIG.1a

FIG.1b

FIG. 2a

FIG. 2b

**FIG. 3a**

FIG.3b

FIG.3c

FIG.4a

FIG.4b

FIG.4c

FIG.4d

FIG.4e

EP 0 274 925 B1

FIG.5a

FIG.5b

23

EP 0 274 925 B1

FIG.5c

FIG.5d

## FIG.6a

## FIG.6b

FIG.6c